# EUROPEAN PATENT APPLICATION

(11) **EP 3 892 459 A1**
(43) Date of publication of application: **13.10.2021**
(21) Application number: 19893592.6
(22) Date of filing: 30.11.2019
(51) Int. Cl.: B32B 7/14, B32B 37/12, B32B 5/02, B32B 5/26

(54) **HEAT-SEALABLE WATERPROOF FILM STRUCTURE HAVING DOUBLE DOT LAYER, AND MANUFACTURING METHOD THEREFOR**

(30) Priority: 07.12.2018 KR 20180157628
(71) Applicant: Bristex Co., Ltd., Seoul 08389 (KR); Sealon Co., Ltd., Seoul 08389 (KR)
(72) Inventor: CHANG, Keun Hun, Seoul 08563 (KR); CHA, Jin Seoup, Seoul 07003 (KR)
(74) Representative: Meroni, Francesca
(86) International application number: PCT/KR2019/016815
(87) International publication number: WO 2020/116871

(57) **Abstract**

Provided are a thermally-bondable waterproof film structure 100 having a double dot layer 60 on a fabric by using a hot-melt adhesive that is dot-coated on the surface thereof, and a method of manufacturing the same. In particular, the present invention relates to a thermally-bondable waterproof film structure 100 having a double dot layer 60 and a method of manufacturing the same, the thermally-bondable waterproof film structure 100 which can be used in the manufacture of outdoor clothing, thereby giving excellent waterproof and windproof properties to the outdoor clothing and being capable of simplifying a manufacturing process of the outdoor clothing.

## Description

### TECHNICAL FIELD

The present invention relates to a thermally-bondable waterproof film structure having a double dot layer used in preparation of a functional fabric for outdoor use and a method of preparing the same, and more particularly, to a thermally-bondable waterproof film structure having a double dot layer and a method of preparing the same, the structure being attached to a fabric substrate such as a woven fabric by applying heat and pressure on one side of the fabric substrate, thereby allowing a simple manufacture of a functional fabric for outdoor clothing and the structure to have excellent waterproofing and windproofing properties.

### BACKGROUND ART

Generally, outdoor clothing has functions of helping control the wearer's body temperature and maintaining a comfortable feeling of the wearer by attaching a breathable waterproof film to the clothing through a laminating process, where the film allows water vapor such as sweat inside the clothing to pass through to the outside to mostly give breathable waterproof properties to the clothing and blocks moisture such as rain from the outside not to seep into the clothing.

However, since the breathable waterproof film has flexible pores formed inside its structure, the waterproof and windproof properties of outdoor clothing may be deteriorated when the film is used in the manufacture of outdoor clothing.

That is, the breathable waterproof fabric as described above is more focused on the breathable function than the waterproof and windproof functions, and thus the fabric acts as a medium controlling the transfer of heat and moisture between the human body and the environment, which makes the fabric to have an excellent function of efficiently discharging heat and sweat generated from the body, but relatively the waterproofing and windproofing properties of the fabric may be poor. Accordingly, a function of maintaining the wearer's temperature may also be reduced.

In this regard, the outdoor clothing manufactured using the breathable waterproof fabric may have an extremely poor heat retention property, and thus multiple layers of clothing need to be worn or the fabric needs to be manufactured thick in the winter season. Therefore, wearing of the outdoor clothing may be inconvenient, and the elasticity of the clothing may be decreased. Also, the manufacturing process of outdoor clothing may be cumbersome, and has the disadvantage of having to spend high production costs. Particularly, although weight reduction of the outdoor clothing is actively pursued to maximize activity of the wearer in recent years, there is a problem in that manufacture of a light-weighted product is difficult when outdoor clothing is manufactured using a breathable waterproof fabric.

The prior arts of a functional fabric having waterproof and windproof properties includes Korean Patent Registration No. 10-1733437 (May 8, 2017),which discloses a functional fabric having excellent windproof and heat retention properties and a method of preparing the functional fabric, wherein the functional fabric is formed of a fabric base layer; and a functional layer that is formed on a surface of the fabric base layer and includes a silicone resin; and Korean Patent Publication No. 10-2010-0024119 (March 5, 2010),which discloses a waterproof fabric including a lining fabric layer; a nanofiber waterproof layer that is laminated on an upper surface of the lining fabric layer, prepared by electrospinning, and formed of a plurality of nanofiber yarns having an average diameter of 100 nm to 2000 nm and an average pore diameter of 0.5 µm to 5 µm in the form of a non-woven fabric; and a surface fabric layer that is laminated on an upper surface of the nanofiber waterproof layer.

However, in the functional fabric having waterproof and windproof functions according to the prior arts, a liquid adhesive used for bonding the fabric base and the waterproof layer has uneven application distribution, and thus the adhesive strength of the liquid adhesive may be reduced, and the liquid adhesive permeates into the fabric layer, resulting in a problem of irregular adhesion. Accordingly, there are problems of poor peeling durability or abrasion durability of the waterproof layer adhered to a fabric substrate, the complicated manufacturing process, and an increased production cost.

### DESCRIPTION OF EMBODIMENTS

### TECHNICAL PROBLEM

Provided are a thermally-bondable waterproof film structure having a double dot layer on a fabric substrate using a dot-coated hot-melt adhesive, and a method of preparing the same. Particularly, the present invention relates to a thermally-bondable waterproof film structure having a double dot layer, the film structure being applied to the manufacture of outdoor clothing to produce the outdoor clothing having excellent waterproof and windproof properties and heat retention characteristics. Also, the present invention relates to a thermally-bondable waterproof film structure having a double dot layer, the film structure capable of simplifying the manufacturing process of outdoor clothing by being thermally bonded to a fabric, and a method of preparing the same. However, the technical problems to be resolved by the present invention are not limited to the above-described problems, and other problems which are not described above may be clearly understood by those skilled in the art through the following description.

### SOLUTION TO PROBLEM

According to an aspect of the present invention, a thermally-bondable waterproof film structure 100 having a double dot layer 60 includes a waterproof film layer 50; a release layer 70 on a lower portion of the waterproof film layer 50; a base layer 25 which is transferred in the form of dots on an upper portion of the waterproof film layer 50; and a hot-melt adhesive layer 30 formed on an upper portion of the base layer 25, wherein the hot-melt adhesive layer 30 is arranged on the base layer 25 to form a double dot layer 60, wherein the thermally-bondable waterproof film structure 100 having a double dot layer 60 has a water pressure resistance in a range of 5,000 mmH₂O to 20,000 mmH₂O, wherein a print layer 10 may be preferably arranged on a lower portion of the waterproof film layer 50.

Also, the hot-melt adhesive layer 30 may be preferably formed of one selected from a polyamide-based resin, a polyurethane-based resin, an ethylene vinyl acetate (EVA) resin, and a polyester-based resin; the base layer 25 may be preferably formed of one selected from an acryl-based resin, a polyurethane-based resin, a polyamide-based resin, a polyester-based resin, a polyolefin-based resin, a polyvinylchloride (PVC) resin, and an EVA resin; and the waterproof film layer 50 may be preferably formed of one selected from a polyurethane, a polyester, and a polyamide.

Also, the double dot layer 60 may be preferably transferred in the form of dots at a density of 1 dot/cm² to 300 dots/cm² on the waterproof film layer, and a thickness of the waterproof film layer 50 may be preferably in a range of 5 µm to 300 µm.

A waterproof fabric of the present invention includes a fabric substrate; and the thermally-bondable waterproof film structure 100 having a double dot layer.

In particular, a method of preparing a thermally-bondable waterproof film structure 100 having a double dot layer 60 includes a first step of preparing a waterproof film layer 50 with a release layer 70 formed on a lower portion of the waterproof film layer 50; a second step of transferring a base layer 25 in the form of dots on an upper portion of the waterproof film layer 50; a third step of scattering hot-melt adhesive powders 35 on an upper portion of the base layer 25; a fourth step of removing by suction the hot-melt adhesive powders 35 other than the hot-melt adhesive powders 35 settled on the upper portion of the base layer 25; a fifth step of heat-fixing the hot-melt adhesive powders 35 settled on the upper portion of the base layer 25 to form a hot-melt adhesive layer 30; and a sixth step of cooling the base layer 25 and the hot-melt adhesive layer 30. The method may preferably further include adding a print layer 10 on a lower portion of the waterproof film layer 50.

### ADVANTAGEOUS EFFECTS OF DISCLOSURE

According to an embodiment of the present invention, a thermally-bondable waterproof film structure 100 having a double dot layer 60 may be thermally-bonded to a fabric substrate for manufacture of outdoor clothing using a flat press or a roll press and thus may facilitate preparation of a functional fabric having waterproof and windproof properties. Also, as a waterproof and windproof functional fabric may be manufactured using a laminating process during a sewing process, steps of preparing outdoor clothing may be reduced, and thus price competitiveness of the final product may increase. In addition, the thermally-bondable waterproof film structure 100 having a double dot layer 60 according to an embodiment of the present invention uses a hot-melt adhesive that does not use a solvent, which makes the method eco-friendly compared to a conventional method that applies an adhesive on a fabric and then attaches a waterproof film to the fabric by bonding the waterproof film and the fabric, and increases the design completeness of outdoor clothing.

Also, since the thermally-bondable waterproof film structure 100 having a double dot layer 60 according to an embodiment of the present invention blocks the inflow of wind or water from the outside, outdoor clothing prepared using the thermally-bondable waterproof film structure 100 having a double dot layer 60 may have excellent heat retention characteristics, and the thermally-bondable waterproof film structure 100 having a double dot layer 60 may have an effect of manufacturing various sports and outdoor clothing products such as mountain-climbing clothes, ski suits, and jumpers, which have excellent shock-absorbing properties.

### BRIEF DESCRIPTION OF DRAWINGS

FIG. 1 is a cross-sectional view of a thermally-bondable waterproof film structure 100 having a double dot layer 60 according to a first embodiment of the present invention;
FIG. 2 is a cross-sectional view of a thermally-bondable waterproof film structure 100 having a double dot layer 60 according to a second embodiment of the present invention;
FIG. 3 is a top view of a thermally-bondable waterproof film structure 100 having a double dot layer 60 according to an embodiment of the present invention;
FIG. 4 is a preparing process diagram of the thermally-bondable waterproof film structure 100 having a double dot layer 60 according to an embodiment of the present invention; and
FIG. 5 is a schematic view of an upper screen roll 120 used in a coating process of a hot-melt adhesive resin according to an embodiment of the present invention.

### BEST MODE

It will be understood that the terms "include," "comprise," or "have" when used in this specification, specify the presence of stated features, numbers, steps, elements, components, or combinations thereof but do not preclude possibility of the presence or addition of one or more other features, numbers, steps, operations, elements, components, or combinations thereof.

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

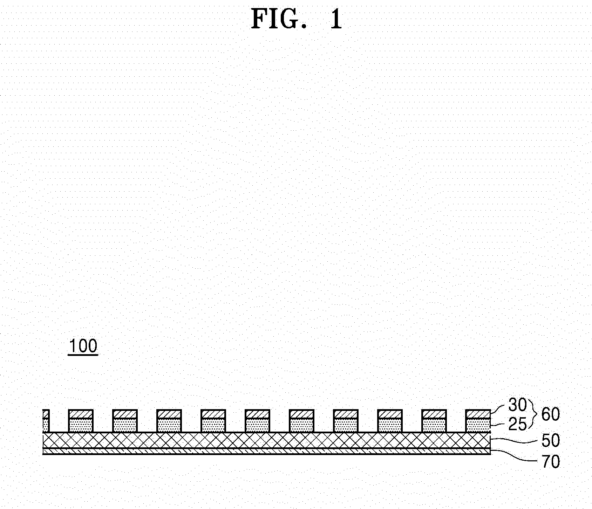

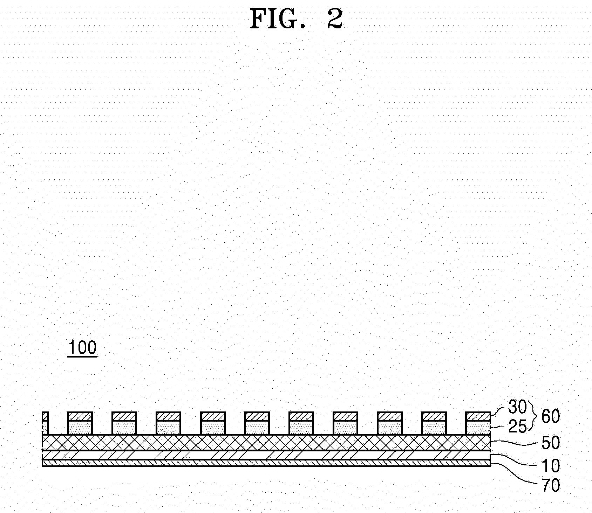

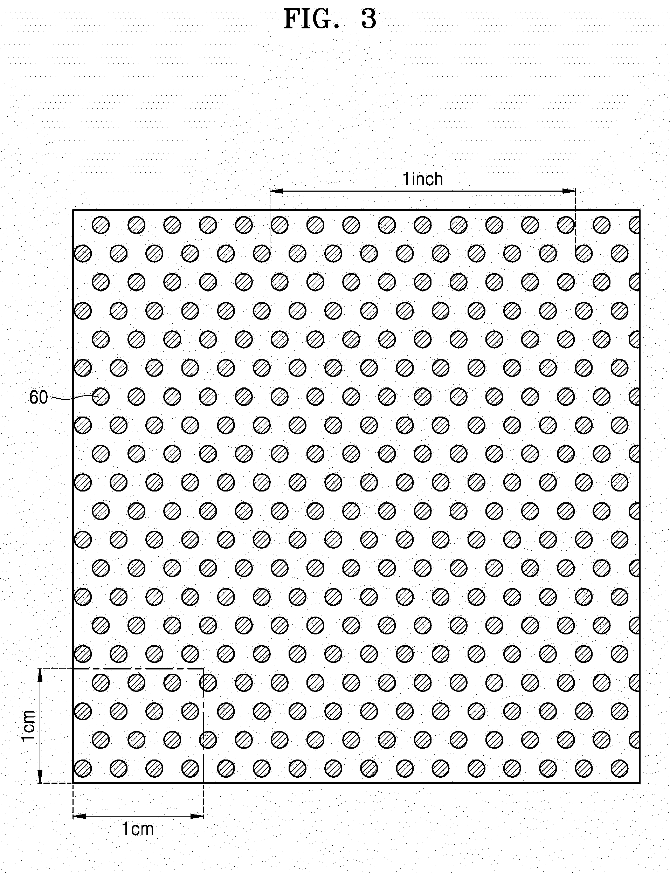

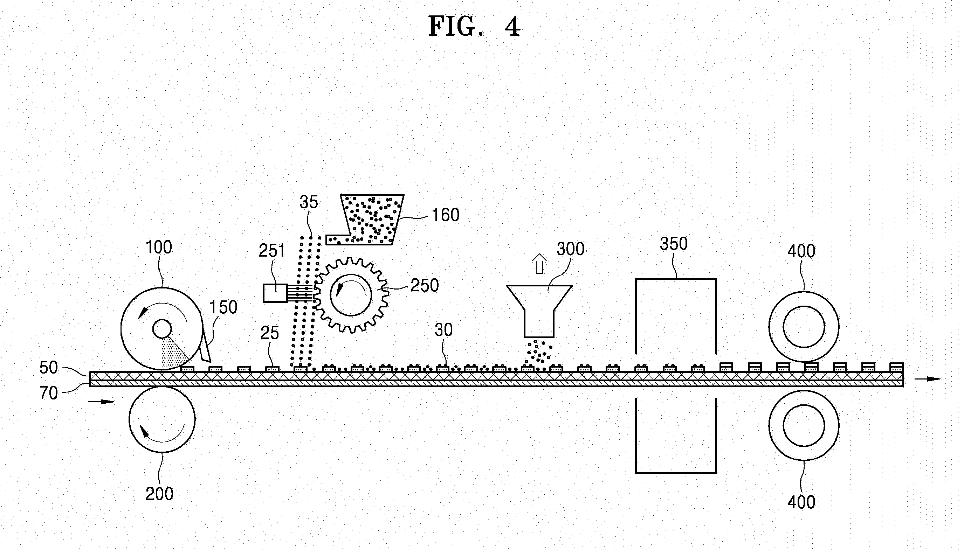

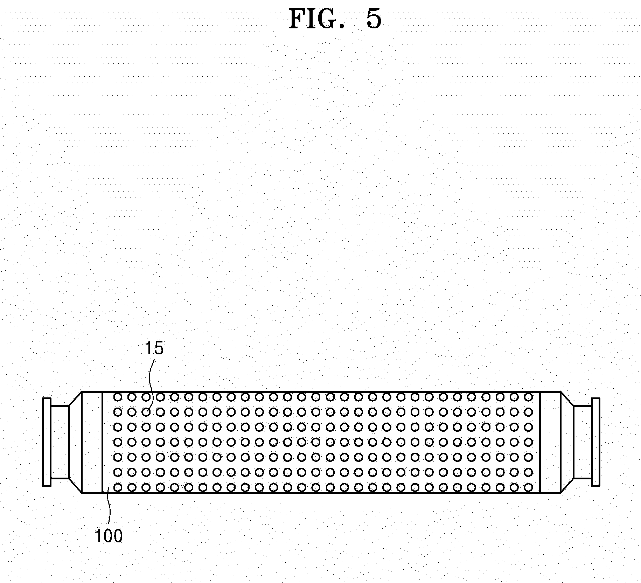

Hereinafter, a thermally-bondable waterproof film structure 100 having a double dot layer 60 and a method of preparing the film structure 100 according to the present invention will be described in detail with reference to the accompanying drawings. FIG. 1 is a cross-sectional view of a thermally-bondable waterproof film structure 100 having a double dot layer 60 according to a first embodiment of the present invention; FIG. 2 is a cross-sectional view of a thermally-bondable waterproof film structure 100 having a double dot layer 60 according to a second embodiment of the present invention; FIG. 3 is a top view of a thermally-bondable waterproof film structure 100 having a double dot layer 60 according to an embodiment of the present invention; FIG. 4 is a preparing process diagram of the thermally-bondable waterproof film structure 100 having a double dot layer 60 according to an embodiment of the present invention; and FIG. 5 is a schematic view of an upper screen roll 120 used in a coating process of a hot-melt adhesive resin according to an embodiment of the present invention.

When a thermally-bondable waterproof film structure 100 having a double dot layer 60 according to an embodiment of the present invention is attached to a fabric substrate in the manufacture of outdoor clothing, thereby providing the fabric substrate with waterproof and windproof properties. As shown in FIG. 1, the thermally-bondable waterproof film structure 100 having a double dot layer 60 according to an embodiment of the present invention includes a waterproof film layer 50; a release layer 70 on a lower portion of the waterproof film layer 50; a base layer 25 which is transferred in the form of dots on an upper portion of the waterproof film layer 50; and a hot-melt adhesive layer 30 formed on an upper portion of the base layer 25.

As shown in FIG. 1, the hot-melt adhesive layer 30 is formed in the form of dots on the upper portion of the base layer 25 to form a double dot layer 60.

That is, according to a first embodiment of the present invention, the waterproof film layer 50, which forms a basal layer, is first needed to prepare a thermally-bondable waterproof film structure 100 having a double dot layer 60 according to an embodiment of the present invention. The waterproof film layer 50 is configured to be adhered to a fabric substrate to provide waterproof and windproof properties to the fabric substrate for the manufacture of outdoor clothing.

That is, the waterproof film layer 50 is not particularly limited as long as it is a flexible film. For example, the waterproof film layer 50 may be a thin film formed of a polyurethane, a polyester, or a polyamide.

A thickness of the waterproof film layer 50 may be preferably in a range of 5 µm to 300 µm. That is, when a thickness of the waterproof film layer 50 is less than 5 µm, lightweightness and flexibility of the manufactured outdoor clothing may be excellent, but handleability and workability of manufacture of the outdoor clothing may be very poor. Also, when a thickness of the waterproof film layer 50 is greater than 300 µm, the tactile feel and flexibility of outdoor clothing, to which the waterproof film 100 is applied, may be poor, and the clothing product may not be manufactured with lightweight.

The waterproof film layer 50 may be, for example, a film having waterproof and windproof properties. When the waterproof film layer 50 is used, waterproof and windproof properties may be provided to the manufactured outdoor clothing. Thus, a waterproof film layer 50 having a water pressure resistance in a range of 5,000 mmH₂O to 20,000 mmH₂Omeasured by KS K 0591 (fabric water resistance test method ― low water pressure method) may be preferably used in clothes such as a raincoat that requires strong waterproofness.

The thermally-bondable waterproof film structure 100 having a double dot layer 60 according to an embodiment of the present invention has a release layer 70 on a lower portion of the waterproof film layer 50.

In general, the release layer 70 is formed of a film having a releasing property that does not adhere well to an adhesive component or a pressure sensitive adhesive component, and when the release layer 70 is attached to the waterproof film layer 50, the release layer 70 may protect the waterproof film layer 50 and may be used to prevent contamination of the waterproof film layer 50 from dust or foreign matters. Also, once the manufacture of clothing is completed, the release layer 70 may be removed using its easily being released characteristics.

In addition, the thermally-bondable waterproof film structure 100 having a double dot layer 60 includes a base layer 25 which is transferred in the form of dots on an upper portion of the waterproof film layer 50. In the manufacture of outdoor clothing using the thermally-bondable waterproof film structure 100 having a double dot layer 60 according to an embodiment of the present invention, the base layer 25 is preferably included to block adhesion to other fabrics of the waterproof film layer 50, to improve processibility by preventing sagging due to gravity, and to prevent deterioration of workability.

The base layer 25 may be formed using one selected from an acryl-based resin, a polyurethane-based resin, a polyester-based resin, a polyolefin-based resin, a polyvinylchloride resin, and an ethylene-vinyl acetate (EVA) copolymer. As shown in FIGS. 1 and 2, the base layer 25 according to an embodiment of the present invention may be preferably transferred in the form of dots on an upper portion of the waterproof film layer 50.

Also, a hot-melt adhesive layer 30 may be formed on an upper portion of the base layer 25. The hot-melt adhesive layer 30 is a member for adhering the waterproof film layer 50 to a fabric substrate for manufacture of outdoor clothing, and thus when heat and pressure are applied to the hot-melt adhesive layer 30 after the manufacture of the thermally-bondable waterproof film structure 100 having a double dot layer 60 according to an embodiment of the present invention, the hot-melt adhesive layer 30 is melted and thus the waterproof film layer 50 is thermally bonded to the fabric substrate.

A hot-melt adhesive constituting the hot-melt adhesive layer 30 refers to a heat-melting adhesive that uses a nonvolatile and nonflammable thermoplastic resin in a solid phase at room temperature without using water or a solvent and is melted in a liquid phase by applying heat thereto, and then is applied to a subject to be attached, and then exhibits adhesive strength as the adhesive cools and solidifies.

As shown in FIGS. 1 and 2 of the present invention, the base layer 25 and the hot-melt adhesive layer 30 formed on the base layer 25 constitute a double dot layer 60.

A density of dots of the double dot layer 60 formed on the upper portion of the waterproof film layer 50 according to an embodiment of the present invention may be appropriately selected.

That is, FIG. 3 is a top view of a thermally-bondable waterproof film structure 100 having a double dot layer 60 according to an embodiment of the present invention. As shown in FIG. 3, a formation density of dots of the double dot layer 60 may be represented by the number of dots of the double dot layer 60 formed in 1 cm² of a surface of the thermally-bondable waterproof film structure 100 having the double dot layer 60, e.g., a unit density. In other words, the unit density of the double dot layer 60 in the present invention may be preferably in a range of 1 dot/cm² to 300 dots/cm², and particularly, the unit density may be preferably in a range of 30 dots/cm² to 220 dots/cm² in terms of adhesive characteristics of the hot-melt adhesive layer 30.

Also, as shown in FIG. 3, the formation density of the double dot layer 60 may be represented by the number of dots of the double dot layer 60 formed in a line on a 1-inch long line, i.e., a linear density. In the present invention, the linear density of dots of the double dot layer 60 may be preferably in a range of 7 dots/inch to 50 dots/inch or, particularly, may be most preferably in a range of 13 dots/inch to 45 dots/inch.

When the double dot layer 60 is formed with the unit density and the linear density within these ranges, adhesive strength of the hot-melt adhesive layer 30 may be the most excellent, and thus peeling durability and abrasion durability of the thermally-bondable waterproof film structure 100 having a double dot layer 60 according to an embodiment of the present invention may be excellent.

Also, according to a second embodiment of the present invention, a print layer 10 may be added to one side of a waterproof film layer 50. That is, as shown in FIG. 2, a thermally-bondable waterproof film structure 100 having a double dot layer 60 according to the second embodiment of the present invention may include the print layer 10 that is arranged on a lower portion of the waterproof film layer and thus provides a pattern to the waterproof film layer 50. As shown in FIG. 2, the print layer 10 provides a pattern to a surface of the waterproof film layer 50 by being arranged on the lower portion of the waterproof film layer 50, and thus a lining is not needed in the manufacture of outdoor clothing, which allows the outdoor clothing to be light-weighted. In particular, since the manufacture process of the outdoor clothing is simplified, price competitiveness of the outdoor clothing may be improved.

The thermally-bondable waterproof film structure 100 having a double dot layer 60 according to an embodiment of the present invention prepared as described above is then thermally-bonded to a fabric substrate, thereby allowing preparation of a waterproof fabric for manufacture of outdoor clothing.

Hereinafter, a method of preparing a thermally-bondable waterproof film structure 100 having a double dot layer 60 according to an embodiment of the present invention will be described with reference to FIG. 4.

FIG. 4 is a preparing process diagram of the thermally-bondable waterproof film structure 100 having a double dot layer 60 according to an embodiment of the present invention. In the preparing process of the thermally-bondable waterproof film structure 100 having a double dot layer 60 according to an embodiment of the present invention, a first step is a step of preparing a waterproof film layer 50 with a release layer 70 formed on a lower portion of the waterproof film layer 50. The waterproof film layer 50 with the release layer 70 formed on its lower portion is inserted between an upper screen roll 120 and a lower roll 200 and thus is transferred in a direction of the arrow as shown in FIG. 4.

Also, as a second step, a base layer 25 is formed on an upper portion of the waterproof film layer 50. In the second step, a base resin is first melted using the upper screen roll 120 and transferred in the form of dots to form the base layer 25 on the waterproof film layer 50.

That is, in the second step, after melting the base resin in the upper screen roll 120, the melted base resin is transferred in the form of dots on the waterproof film layer 50 through a doctor blade 150 disposed at one side of the upper screen roll 120 to form the base layer 25.

The second step is preferably performed using the upper screen roll 120. In particular, when the base resin is transferred in the form of dots using the upper screen roll 120, the tactile feel and drapability of the thus prepared fabric for manufacture of outdoor clothing may be excellent.

Also, as shown in FIG. 5, the upper screen roll 120 may preferably have 30 to 180 outlet holes 15 per an area of 1 cm², wherein the base resin is melted and eluted through the outlet holes 15, and a diameter of each of the outlet holes 15 may preferably be in a range of 350 µm to 750 µm.

When the step of forming the base layer 25 is described in further detail, as shown in FIG. 4, the base resin is applied on the waterproof film layer 50 in the form of dots through the upper screen roll 120, and thus the base layer 25 is formed. Here, an amount of the base resin transferred in the form of dots on the waterproof film layer 50 may be preferably in a range of 10 g/m² to 30 g/m². When the amount of the applied base resin is greater than 30 g/m², the texture may be too hardened, which may degrade the tactile feel of the fabric. When the amount of the applied base resin is less than 10 g/m², the bonding strength may be not enough, and thus sufficient durability to withstand washing may not be obtained, and as a result, the adhesive strength between the waterproof film layer 50 and the fabric substrate may decrease.

A transfer rate of the base layer 25 may be most preferably in a range of 20 meters to 30 meters per minute. Also, according to an embodiment of the present invention, a melt viscosity of the base resin may be most preferably in a range of 7,000 cps to 45,000 cps.

The base layer 25 may be formed by melting one base resin selected from an acryl-based resin, a polyurethane, a polyamide, a polyester, a polyolefin, polyvinylchloride (PVC), and an ethylene-vinyl acetate (EVA) copolymer by applying a suitable temperature to the base resin.

Next, a third step is scattering hot-melt adhesive powders 35 on an upper portion of the base layer 25.

The base layer 25 formed in the form of dots in the second step is a melted product that has been produced by applying a suitable temperature to the base resin, where the melted product may be transferred in the form of dots on the waterproof film layer 50 using the upper screen roll 120. In the third step, before the melted product of the base resin transferred in the form of dots is cooled and solidified, the hot-melt adhesive powders 35 are scattered on the base layer 25.

That is, the hot-melt adhesive powders 35 having a particle size in a range of 80 *µ*m to 200 *µ*m filled in a hopper 160 are supplied to the waterproof film layer 50 having the base layer 25 formed thereon using a scattering roll 250, and here a vibration brush 251 scatters the hot-melt adhesive powders 35 onto the base layer 25.

Here, the hot-melt adhesive powders 35 are scattered in the powder form on the waterproof film layer 50 and settled on the base layer 25 that is not yet solidified and thus may form a hot-melt adhesive layer 30 in the form of dots.

Then, the process may undergo a fourth step, in which the hot-melt adhesive powders 35 scattered on the waterproof film layer 50 other than the hot-melt adhesive powders 35 settled on the base layer 25 are suctioned and removed using a suction device 300.

Since the base resin forming the base layer 25 is in a state before solidification after being transferred in the form of dots on the waterproof film layer 50, the hot-melt adhesive powders 35 settled on the base layer 25 are attached on the base layer 25. However, the hot-melt adhesive powders 35 that are not settled on the base layer 25 and fell on the waterproof film layer 50 are suctioned by the suction device 300 and removed from a surface of the waterproof film layer 50 in the fourth step.

Subsequently, the process may undergo a fifth step, in which the waterproof film layer 50, from which the hot-melt adhesive powders 35 not settled on the base layer 25 have been removed, passes through a tenter 350, and thus moisture contained in the double dot layer 60 formed on the waterproof film layer 50 may be evaporated, and the base layer 25 and the hot-melt adhesive layer 30 formed on the base layer 25 are thermally fixed.

Here, a temperature condition of the tenter 350 may be appropriately set according to the melting temperature of the hot-melt adhesive constituting the hot-melt adhesive layer 30.

In the fifth step, the hot-melt adhesive powders 35 settled on the base layer 25 form the hot-melt adhesive layer 30 on the base layer 25 in the form of dots at the same time the hot-melt adhesive powders 35 are melt.

Here, the hot-melt adhesive layer 30 formed at a rate of 7 g/m² to 30 g/m² may provide the most excellent adhesive strength after being thermally-bonded to the fabric substrate, which allows the waterproof film layer 50 to be prepared with excellent peeling durability and abrasion durability.

That is, when the hot-melt adhesive layer 30 is formed at a rate lower than 7 g/m², adhesiveness of the hot-melt adhesive layer 30 may not be enough, and thus the thermally-bondable waterproof film structure 100 having a double dot layer 60 according to an embodiment of the present invention may not obtain sufficient washing durability after being attached to the fabric substrate. Also, it is difficult to completely seal the needle holes of the sewing part, and thus waterproof and windproof properties may be deteriorated.

When the hot-melt adhesive layer 30 is formed at a rate higher than 30 g/m², the time for melting a hot-melt adhesive during attachment to a fabric substrate may be increased, which may result in reduced productivity of the fabric manufacture and poor tactile feel and flexibility of the prepared clothes.

After transferring the base layer 25 in the form of dots on the waterproof film layer 50, the hot-melt adhesive layer 30 is formed in the form of dots on the base layer 25 as described above, thereby completing a double dot layer 60.

Also, after completing the fifth step, the process may undergo a sixth step, in which the double dot layer 60 consisting of the base layer 25 and the hot-melt adhesive layer 30 is cooled. In the sixth step, the double dot layer 60 is cooled using a cooling roll 400, and the waterproof film structure 100 thus prepared may be taken up thereafter.

Also, according to the second embodiment of the present invention, a step of adding a print layer 10 on a lower portion of the waterproof film layer 50 may further be included in the method.

As shown in FIG. 2, the print layer 10 is arranged on the lower portion of the waterproof film layer 50 to provide a pattern to the waterproof film layer 50, and thus a lining of outdoor clothing is not needed during the manufacturing of the outdoor clothing, and the outdoor clothing may be manufactured light-weighted. In particular, since the manufacture process of the outdoor clothing is simplified, price competitiveness of the outdoor clothing may be improved.

The print layer 10 is formed under the waterproof film layer 50, and may be formed by a common printing method, i.e., a solvent printing, a latex printing, a toner printing, or a transfer printing, and the like, but is not limited thereto.

The print layer 10 may have various design effects by mixing various dyes that respond to light, temperature, heat, water, etc. in addition to dyes exhibiting colors and designs. To this end, the print layer 10 may be prepared by mixing a textile printing ink with at least one selected from a thermochromic dye, a photochromic dye, a phosphorescent powder, a UV blocking agent, a water and oil repellent agent, a brightening agent, a water-based flame retardant paint, and glass beads. When these materials are used, particular design patterns may be seen or hidden with respect to external conditions such as light, heat, ultraviolet (UV) light, and water, and thus the design effect may be highlighted.

The thermally-bondable waterproof film structure 100 having a double dot layer 60 prepared according to these steps may be thermally-bonded to a fabric substrate for manufacture of clothing by applying heat and pressure to the thermally-bondable waterproof film structure 100, thereby allowing preparation of a functional fabric having waterproof and windproof properties. Also, since the functional fabric having waterproof and windproof properties is prepared by laminating during the sewing process, the steps of a preparation process of outdoor clothing may be reduced, and thus price competitiveness of the final product may be improved. In addition, since the thermally-bondable waterproof film structure 100 having a double dot layer 60 uses a hot-melt adhesive and thus does not use an organic solvent, the thermally-bondable waterproof film structure 100 having a double dot layer 60 is eco-friendly and may have an effect of increasing design completeness of outdoor clothing.

While the present invention has been particularly shown and described with reference to exemplary embodiments thereof, it will be understood by those of ordinary skill in the art that various changes in form and details may be made therein without departing from the scope of the present invention. It will also be understood by those skilled in the art that those of ordinary skill in the art may readily understand that various changes and modifications may be made without departing from the spirit or essential characteristics of the present invention. Therefore, it should be understood that the embodiments described above are illustrative in all aspects and should not be construed as limiting the scope of the present invention.

## Claims

1. A thermally-bondable waterproof film structure (100) having a double dot layer (60) for preparing a waterproof fabric, wherein the thermally-bondable waterproof film structure (100) is attached to a fabric substrate and comprises:
a waterproof film layer (50);
a release layer (70) on a lower portion of the waterproof film layer (50);
a base layer (25) which is transferred in the form of dots on an upper portion of the waterproof film layer (50); and
a hot-melt adhesive layer (30) formed on an upper portion of the base layer (25), wherein the hot-melt adhesive layer (30) is arranged on the base layer (25) to form a double dot layer (60).

2. The thermally-bondable waterproof film structure (100) of claim 1, wherein the thermally-bondable waterproof film structure (100) having a double dot layer (60) has a water pressure resistance in a range of 5,000 mmH₂O to 20,000 mmH₂O.

3. The thermally-bondable waterproof film structure (100) of claim 1, wherein a print layer (10) is arranged on a lower portion of the waterproof film layer (50).

4. The thermally-bondable waterproof film structure (100) of claim 1, wherein the hot-melt adhesive layer (30) is formed of one selected from a polyamide-based resin, a polyurethane-based resin, an ethylene vinyl acetate (EVA) resin, and a polyester-based resin.

5. The thermally-bondable waterproof film structure (100) of claim 1, wherein
the base layer (25) is formed of one selected from an acyl-based resin, a polyurethane-based resin, a polyester-based resin, a polyolefin-based resin, a polyvinyl chloride (PVC) resin, and an EVA resin.

6. The thermally-bondable waterproof film structure (100) of claim 1, wherein the waterproof film layer (50) is formed of one selected from a polyurethane, a polyester, and a polyamide.

7. The thermally-bondable waterproof film structure (100) of claim 1, wherein the double dot layer (60) transferred in the form of dots is formed at a density of 1 dot/cm² to 300 dots/cm² on the waterproof film layer (50).

8. The thermally-bondable waterproof film structure (100) of claim 1, wherein a thickness of the waterproof film layer (50) is in a range of 5 µm to 300 µm.

9. A waterproof fabric comprising:
a fabric substrate; and
the thermally-bondable waterproof film structure (100) having a double dot layer (60) for preparing a waterproof fabric according to any one of claims 1 to 8, the thermally-bondable waterproof film structure (100) being thermally-bonded to one side of the fabric substrate.

10. A method of preparing a thermally-bondable waterproof film structure (100) having a double dot layer (60) for preparing a waterproof fabric, the method comprising:
a first step of preparing a waterproof film layer (50) with a release layer (70) formed on a lower portion of the waterproof film layer (50);
a second step of transferring a base layer (25) in the form of dots on an upper portion of the waterproof film layer (50);
a third step of scattering hot-melt adhesive powders (35) on an upper portion of the base layer (25);
a fourth step of removing by suction the hot-melt adhesive powders (35) other than the hot-melt adhesive powders (35) settled on an upper portion of the base layer (25);
a fifth step of heat-fixing the hot-melt adhesive powders (35) settled on an upper portion of the base layer (25) to form a hot-melt adhesive layer (30); and
a sixth step of cooling the base layer (25) and the hot-melt adhesive layer (30).

11. The method of preparing a thermally-bondable waterproof film structure (100) according to claim 10 further comprising:
adding a print layer (10) on a lower portion of the waterproof film layer (50).
